(19) Europäisches Patentamt

European Patent Office

Office européen des brevets

(11) **EP 0 928 952 A1**

(12) **DEMANDE DE BREVET EUROPEEN**

(43) Date de publication:
**14.07.1999 Bulletin 1999/28**

(51) Int Cl.⁶: **G01C 5/00**, G05D 1/06

(21) Numéro de dépôt: **99400040.4**

(22) Date de dépôt: **08.01.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **12.01.1998 FR 9800207**

(71) Demandeur: **DASSAULT ELECTRONIQUE**
**F-92214 Saint-Cloud (FR)**

(72) Inventeurs:
• **Lepere, Gérard**
  **93300 Aubervilliers (FR)**
• **Meunier, Hugues**
  **78690 Les Essarts le Roi (FR)**

(74) Mandataire: **Plaçais, Jean-Yves**
**Cabinet Netter,**
**40, rue Vignon**
**75009 Paris (FR)**

(54) **Procédé et dispositif d'anti-collision terrain pour aéronef**

(57) Un dispositif d'aide à la navigation aérienne, embarqué à bord d'un aéronef, reçoit sur une entrée des indications d'état représentant sa position spatiale et son vecteur vitesse, et stocke une représentation 3D du relief survolé. Il comprend des moyens de traitement qui définissent, en fonction des indications d'état, un secteur d'exploration rapporté à l'avion, et calculent dans ce secteur un contour en fonction de l'intersection de ce secteur avec le relief, en vue de son affichage. Ledit secteur est défini par une nappe de lignes de trajectoire obtenues à partir du vecteur vitesse et de vecteurs auxiliaires calculés par décalage du vecteur vitesse de l'aéronef selon une loi de balayage angulaire choisie.

FIG.2

# EP 0 928 952 A1

## Description

L'invention concerne l'assistance à la navigation aérienne, notamment lorsque survient un risque de collision, entre un aéronef et la zone qu'il survole.

Comme décrit dans EP-A-0 565 399 et EP-A-0 802 469, ces assistances comprennent notamment des moyens de détection d'informations d'état concernant l'aéronef, telles que ses positions spatiales relative (par rapport au terrain survolé) et/ou absolue (par rapport à une altitude de référence, comme le niveau de la mer), ainsi que son vecteur vitesse et éventuellement son vecteur accélération (informations que l'on appellera sans distinction, ci-après, la dynamique de l'aéronef).

A bord d'un aéronef, la centrale inertielle couplée à un système dit "Global Positioning System" ou GPS, associé à un filtre de Kalman, peut fournir certaines de ces informations (respectivement les vitesse et accélération, et les latitude et longitude). Les autres informations peuvent être obtenues à l'aide de moyens de mesure dits "baro-inertiels" (altitude absolue) ou d'un radio-altimètre (altitude relative).

Mais les assistances comprennent également des dispositifs d'anti-collision destinés à avertir le pilote qu'un risque de collision avec le sol (ou terrain survolé) peut survenir. De tels dispositifs sont notamment utiles lors de l'approche préalable à l'atterrissage, ainsi qu'après le décollage, du fait que l'aéronef se trouve nécessairement près du sol.

De tels dispositifs sont connus sous les noms de "Ground Proximity Warning Systems", en abrégé GPWS, ou "Ground Collision Avoidance System", en abrégé GCAS.

La Demanderesse a décrit dans le fascicule-brevet EP-A-0 565 399 et dans la Demande de Brevet français n°96 04678 (ainsi que dans le fascicule de la Demande EP-A-0 802 469 correspondante) des dispositifs d'aide à la navigation aérienne de type GCAS, comprenant :

- une entrée permettant de recevoir des indications d'état représentatives de la position et au moins du vecteur vitesse de l'aéronef,
- une mémoire de travail permettant de stocker une représentation tridimensionnelle du relief de la région survolée par l'aéronef,
- des moyens de traitement capables de définir, en fonction des indications d'état, un secteur d'exploration rapporté à l'avion, et à calculer dans ce secteur un contour en fonction de l'intersection de ce secteur avec le relief, ainsi que
- des moyens permettant de visualiser le contour, notamment.

Ce type de dispositif d'aide peut également permettre au pilote de visualiser la trajectoire future estimée de l'aéronef et éventuellement les paramètres d'une trajectoire standard reposant sur des manoeuvres d'évasive théoriques permettant d'éviter le relief.

On s'est intéressé depuis à la généralisation de ces systèmes, et à leur ergonomie. Il s'agit en effet d'équiper un maximum d'avions civils, et de fournir au pilote une information aussi claire et facile à interpréter que possible, car il peut se trouver dans une situation qui requiert son attention par ailleurs.

Dans une approche, il a été proposé de visualiser le relief sous la forme de courbes de niveau horizontales. La Demanderesse estime que cela est délicat à interpréter, notamment lorsque l'aéronef se déplace dans un plan non horizontal, et/ou à proximité des zones aéroportuaires et des régions accidentées.

Par ailleurs, dans certaines situations, le relief du terrain survolé est particulièrement accidenté, et/ou l'aéronef présente des problèmes techniques. La trajectoire d'évasive proposée peut s'avérer impossible à mettre en oeuvre du fait, par exemple, qu'elle intersecte le relief, et par conséquent entrainer l'émission d'une alarme, alors que la trajectoire courante que suit l'aéronef ne risque pas d'intersecter le relief.

Pour les raisons évoquées ci-avant, ainsi que pour d'autres raisons qui seront évoquées plus loin, les dispositifs actuels ne sont donc pas entièrement satisfaisants.

La présente invention a notamment pour but de proposer un dispositif de type GCAS qui soit affranchi de tout ou partie des inconvénients précités.

L'invention propose à cet effet un dispositif d'aide à la navigation aérienne du type décrit dans l'introduction, dans lequel les moyens de traitement sont agencés, tout d'abord, pour calculer des vecteurs vitesse auxiliaires par décalage du vecteur vitesse (instantané) de l'aéronef selon une loi de balayage angulaire choisie, et ensuite, pour définir le secteur par une nappe de lignes de trajectoire partant du vecteur vitesse et des vecteurs vitesse auxiliaires.

On entend ici par vecteur vitesse auxiliaire, un vecteur dont deux des trois coordonnées dans un référentiel sphérique rapporté à un centre de rotation représentatif de la position de l'aéronef, à savoir le rayon r et l'angle par rapport à la verticale θ, sont inchangées par rapport à celles du vecteur vitesse instantané, tandis que l'angle φ de sa projection dans le plan horizontal est différente de celle du vecteur vitesse. En d'autres termes, pour obtenir le balayage angulaire, on fait varier l'angle φ de part et d'autre de la valeur qu'il possède au niveau du vecteur vitesse.

Ainsi, le pilote dispose d'un contour (ou carte), qui représente le relief dans la direction du vecteur vitesse de l'aéronef, et sur un secteur angulaire choisi. Le mot contour est à prendre au sens le plus large du terme, dans la mesure où il représente toutes les lignes d'intersection qui sont affichées simultanément et qui séparent chacune deux zones ou régions. Comme on le verra plus loin, il désigne donc, ici, aussi bien un contour de terrain (également appelé fond de carte ou fond d'image), qu'un contour d'alerte.

De préférence, le balayage angulaire est effectué sur une plage comprise entre 1° et 360°, et plus préférentiellement encore entre 60° et 120°.

Dans un mode de réalisation préférentiel, les lignes de trajectoire ont toutes la même géométrie. Elles pourront notamment être droites ou courbes. Elles pourront notamment être des répliques d'une trajectoire future estimée de l'aéronef, déduite de la trajectoire courante (elles sont alors dites "à commandes de pilotage inchangées").

Afin d'améliorer la précision du contour, les moyens de traitement peuvent être agencés de manière à définir plusieurs nappes de lignes de trajectoire ayant des décalages verticaux différents, de préférence espacés au départ de façon sensiblement régulière. Par exemple les nappes pourront être au moins partiellement sensiblement parallèles entre elles. Cela permet de "sonder" le relief sur des hauteurs (ou couches) importantes.

Mais, les lignes de trajectoires peuvent également être formées à partir de lignes (premières) de trajectoire d'évasive (ou d'évitement) estimées reposant sur des manoeuvres (elles sont alors dites " à commandes de pilotage modifiées selon une première loi d'évasive choisie").

Il pourra par exemple s'agir de la trajectoire d'évasive connue de l'homme de l'art sous le nom de "caution", laquelle est obtenue par une première loi d'évasive comprenant une prolongation d'une représentation de la trajectoire courante établie en fonction d'un critère choisi, suivie d'une manoeuvre ayant une composante verticale. Dans cette hypothèse, les moyens de traitement pourront être réalisés de façon à permettre, lorsque l'une au moins des premières trajectoires d'évasive estimées intersecte le relief, le calcul du contour en fonction du point de départ de chaque manoeuvre en chaque première ligne de trajectoire d'évasive estimée de ladite nappe.

Le pilote dispose alors d'un contour que l'on peut qualifier de premier contour d'alerte (ou contour de préalarme) qui peut être éventuellement affiché en même temps qu'un contour obtenu à l'aide des trajectoires futures estimées, ou bien séparément de celui-ci. Un tel premier contour d'alerte fournit au pilote des informations sur la distance qui sépare son aéronef du relief dans la "direction" de la première trajectoire d'évasive proposée.

Les lignes de trajectoire pourront être également des secondes lignes de trajectoire d'évasive (ou d'évitement) estimées, à commandes de pilotage modifiées selon une seconde loi d'évasive choisie, partant du vecteur vitesse et des vecteurs auxiliaires. Il pourra par exemple s'agir de la trajectoire d'évasive connue de l'homme de l'art sous le nom de "warning", laquelle est obtenue par une seconde loi d'évasive comprenant une prolongation d'une représentation de la trajectoire courante établie en fonction d'un critère choisi, suivie d'une manoeuvre ayant une composante verticale. Dans cette hypothèse, les moyens de traitement pourront être réalisés de façon à permettre, lorsque l'une au moins des secondes trajectoires d'évasive estimées intersecte le relief, le calcul du contour en fonction du point de départ de chaque manoeuvre en chaque seconde ligne de trajectoire d'évasive estimée de ladite nappe.

Le pilote dispose alors d'un contour que l'on peut qualifier de second contour d'alerte (ou contour d'alarme) qui peut être éventuellement affiché en même temps que le premier contour d'alerte et que le contour obtenu à l'aide des trajectoires futures estimées, ou bien séparément de l'un ou l'autre de ceux-ci. Un tel second contour d'alerte fournit au pilote des informations sur la distance qui sépare son aéronef du relief dans la "direction" de la seconde trajectoire d'évasive proposée.

Préférentiellement chaque intersection entre le relief et une nappe de trajectoires d'évasive est limitée à une partie amont, chaque contour étant alors constitué de cette partie amont et d'une prolongation vers l'aval déterminée selon une règle choisie, par exemple une prolongation linéaire.

On entend ici par partie amont, la zone ou région qui se trouve placée entre une portion de contour et l'aéronef, et partie aval celle qui se trouve placée au delà de cette portion de contour.

Selon une autre caractéristique de l'invention, les moyens de traitement comprennent des moyens de différenciation capables d'attribuer des marquages différents aux zones qui sont situées de part et d'autre de chaque partie du contour, ces marquages étant choisis en fonction d'un critère prédéterminé portant sur un risque de collision entre l'aéronef et le relief.

Par exemple, le critère prédéterminé pourra être une loi portant sur la distance séparant chaque point du contour du point représentatif du relief situé à la verticale du point de contour, les marquages différents correspondant alors à des intervalles de distance différents, prédéterminés et représentatifs de risques de collision associés.

Préférentiellement, chaque marquage consiste en une colorisation dont les différentes couleurs sont choisies parmi une famille de normes comprenant au moins la norme européenne JAR 25-1322 et la norme américaine FAR 25-1322, la couleur la plus froide correspondant au risque de collision le plus petit. On pourra par exemple choisir comme couleurs, par ordre de risque de collision décroissant : le rouge, l'orange, le jaune, le vert et le bleu.

Bien entendu, on pourra choisir comme marquages des dégradés de gris allant du blanc au noir, ou bien des hachures (ou trames) de variétés différentes.

Selon encore une autre caractéristique de l'invention, les moyens de traitement sont agencés pour commander l'affichage en alternance du contour et d'une carte météorologique. Bien entendu, on peut prévoir que l'affichage du contour et d'une carte météorologique soit simultané. On peut également prévoir que des informations complémentaires, notamment de type localisation d'aéroports soient affichées simultanément avec le contour.

Selon encore une autre caractéristique de l'invention, les moyens de traitement sont agencés pour déclencher une pré-alarme sonore ou visuelle choisie en cas d'intersection entre une nappe formée de premières lignes de trajectoire d'évasive. On peut également prévoir qu'une alarme sonore et/ou visuelle soit déclenchée en cas d'intersection entre une nappe formée de secondes lignes de trajectoire d'évasive. Bien entendu, on peut ne prévoir que l'une ou l'autre des alarme et pré-alarme, ou bien les deux. Celles-ci pourront par exemple déclencher automatiquement l'affichage du contour.

Selon encore une autre caractéristique de l'invention, on peut prévoir une procédure "d'évitement de terrain" comprenant au moins une composante horizontale. Pour ce faire, les moyens de traitement pourront être agencés de façon à émettre une autre alarme, visuelle et/ou sonore, lorsque l'intersection, vérifie un critère choisi, entre, d'une part, le relief et l'une au moins des première et seconde trajectoire d'évasive, et d'autre part, le relief et au moins la trajectoire future estimée.

Ce critère choisi pourra, par exemple, porter au moins sur la distance verticale qui sépare la représentation de l'intersection entre le relief et la trajectoire d'évasive et le sommet du relief sensiblement au droit de l'intersection entre ce relief et la trajectoire d'évasive concernée.

De préférence, les moyens de traitement sont capables de définir un domaine englobant chaque ligne de trajectoire constituant une nappe, en fonction des indications d'état et du relief, ainsi que de déterminer l'intersection entre chaque nappe et le relief à partir des intersections des domaines de chacune de ses lignes de trajectoire avec ledit relief. De telles lignes de trajectoire sont alors appelées "palpeur". Elles permettent de tenir compte des incertitudes de mesures sur la position et la dynamique de l'aéronef.

Dans ce cas, le point d'intersection d'une ligne de trajectoire contribuant à la formation du contour est obtenu, de préférence, en prenant le point d'intersection, parmi tous les points d'intersection entre le domaine de cette ligne de trajectoire et le relief, qui possède l'altitude la plus élevée.

Selon encore une autre caractéristique de l'invention, l'entrée du dispositif peut recevoir des indications d'état, et notamment une altitude réelle et une altitude relative référencée par rapport au terrain survolé, et les moyens de traitement sont agencés pour déterminer les trajectoires (futures) estimées et d'évasive (ou d'évitement) à partir d'une altitude choisie parmi les altitudes réelle et relative et une altitude composite en fonction d'une comparaison à deux seuils d'altitude prédéterminés, ladite altitude choisie étant :

-    soit l'altitude réelle lorsque ladite altitude réelle est inférieure aux deux seuils,
-    soit l'altitude relative lorsque ladite altitude réelle est supérieure aux deux seuils,
-    soit l'altitude composite lorsque ladite altitude réelle est comprise entre les deux seuils, celle-ci étant formée de préférence à partir d'une combinaison pondérée des altitudes relative et réelle.

Cela permet de renforcer la fiabilité des résultats (contour).

Dans un mode de réalisation préférentiel de l'invention, le dispositif comprend une mémoire de masse pour permettre de stocker une base de données représentant au moins une partie du globe terrestre, ainsi que des moyens de gestion capables d'extraire de cette base de données les représentations tridimensionnelles du relief (également appelées cartes locales temporaires) en fonction des paramètres de position de l'aéronef, pour les placer au fur et à mesure du déplacement de l'aéronef dans la mémoire de travail. Cela permet de rendre autonome le dispositif.

L'invention propose également un procédé d'aide à la navigation aérienne d'un aéronef, comportant les étapes connues suivantes :

a) recevoir dans l'aéronef des indications d'état représentant sa position et son vecteur vitesse,
b) stocker dans une mémoire de travail une représentation tridimensionnelle du relief de la région survolée par l'aéronef,
c) définir, en fonction desdites indications d'état, un secteur d'exploration rapporté à l'aéronef, et calculer dans ce secteur un contour en fonction de l'intersection de ce secteur avec le relief, et
d) visualiser ledit contour,

le procédé étant remarquable du fait que son étape c) comporte les sous-étapes suivantes :

c1) calculer des vecteurs vitesse auxiliaires par décalage du vecteur vitesse de l'aéronef selon une loi de balayage angulaire choisie, et
c2) définir ledit secteur par une nappe de lignes de trajectoire partant du vecteur vitesse et des vecteurs vitesse auxiliaires.

D'autres caractéristiques et avantages de l'invention apparaîtront à l'examen de la description détaillée ci-après, et des dessins annexés, sur lesquels :

- la figure 1 est un schéma de principe très général d'un dispositif d'aide à la navigation aérienne, de type GCAS, tel que ceux décrits dans EP-A-0 565 399 et FR-96 04678;

- la figure 2 est un schéma détaillé d'un exemple de réalisation d'un dispositif selon l'invention;

- la figure 3 illustre un domaine d'incertitude sur la position d'un aéronef;

- la figure 4 illustre l'incertitude liée à la trajectoire estimée d'un aéronef, projetée dans le plan horizontal;

- la figure 5 est une vue en coupe verticale illustrant sur une situation les bases d'un premier mode de réalisation de l'invention, la position d'un avion vis-à-vis du relief matérialisé, à un instant donné, ainsi que les trois droites directrices représentatives respectivement d'une trajectoire d'évitement et de trajectoires estimées parallèles;

- la figure 6 illustre la carte de risque de collision formée à partir d'une multiplicité de coupes du type de celle de la figure 5, et correspondant à un cycle de balayage;

- les figures 7A et 7B illustrent sur deux situations les bases d'un second mode de réalisation de l'invention;

- les figures 8A à 8D illustrent différentes visualisations que l'on peut obtenir selon ce second mode de réalisation de l'invention;

- la figure 9 illustre schématiquement une ligne de trajectoire courbe projetée dans un plan;

- la figure 10 illustre la manière d'engendrer les visualisations des figures 8; et

- la figure 11 illustre très schématiquement différents volumes devant un aéronef, et notamment dans un cas particulier où une fausse alarme peut survenir si le traitement n'est pas inhibé.

Les dessins annexés sont pour- l'essentiel de caractère certain. En conséquence, ils pourront non seulement permettre de mieux faire comprendre la description détaillée qui suit, mais aussi contribuer à la définition de l'invention, le cas échéant.

En outre, et compte tenu de la technicité de la matière, les contenus descriptifs de EP-A-0 565 399 et EP-A-0 802 469 (issu de FR-96 04678) sont à considérer comme intégralement incorporés à la présente description. Il en est de même pour le document suivant:

- Note de DASSAULT ELECTRONIQUE n°810-196 AN, diffusée publiquement en octobre 1997, intitulée "A New Approach to CFIT Prevention and to improve situational awareness : GCAS GROUND COLLISION AVOIDANCE SYSTEM".

Les messages standard utilisés en aviation civile sont exprimés en anglais. Parmi ceux-ci, on mentionnera les termes suivants, qui qualifient le risque de collision avec le sol:

- "advisory", ou avis, qui correspond à une indication ou bien un conseil,
- "caution", que l'on appelle ici pré-alarme, et qui présente un caractère d'avertissement,
- "warning", que l'on appelle ici alarme, et qui présente un caractère d'urgence.

Séparément ou ensemble, ces différents niveaux de message sont appelés des "alertes". Pour alléger la description, on ne parlera pas des avis, ou alertes "advisory", qui peuvent être considérés par exemple comme une version anticipée des pré-alarmes.

On utilisera aussi des unités qui n'appartiennent pas au système MKSA, bien qu'elles en soient dérivées, dans la mesure où elles s'imposent en aéronautique civile.

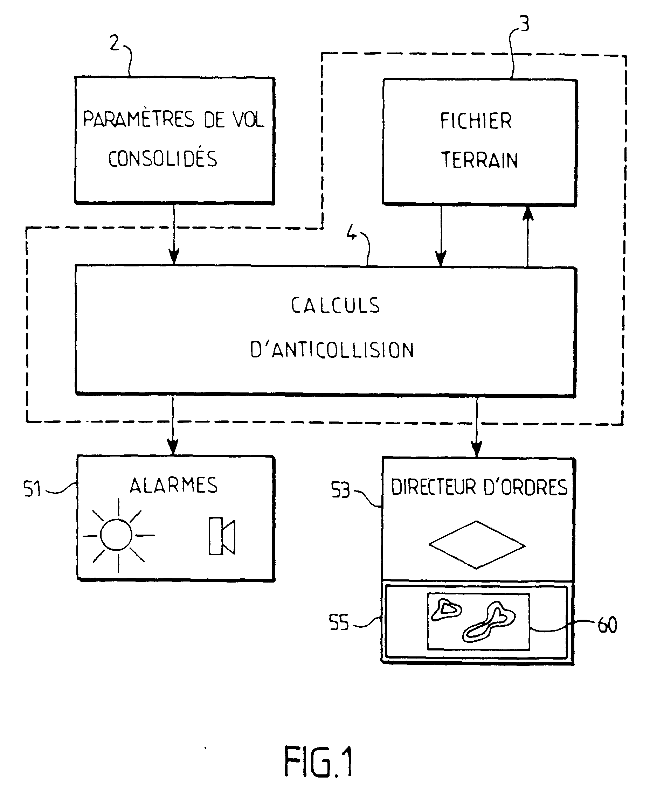

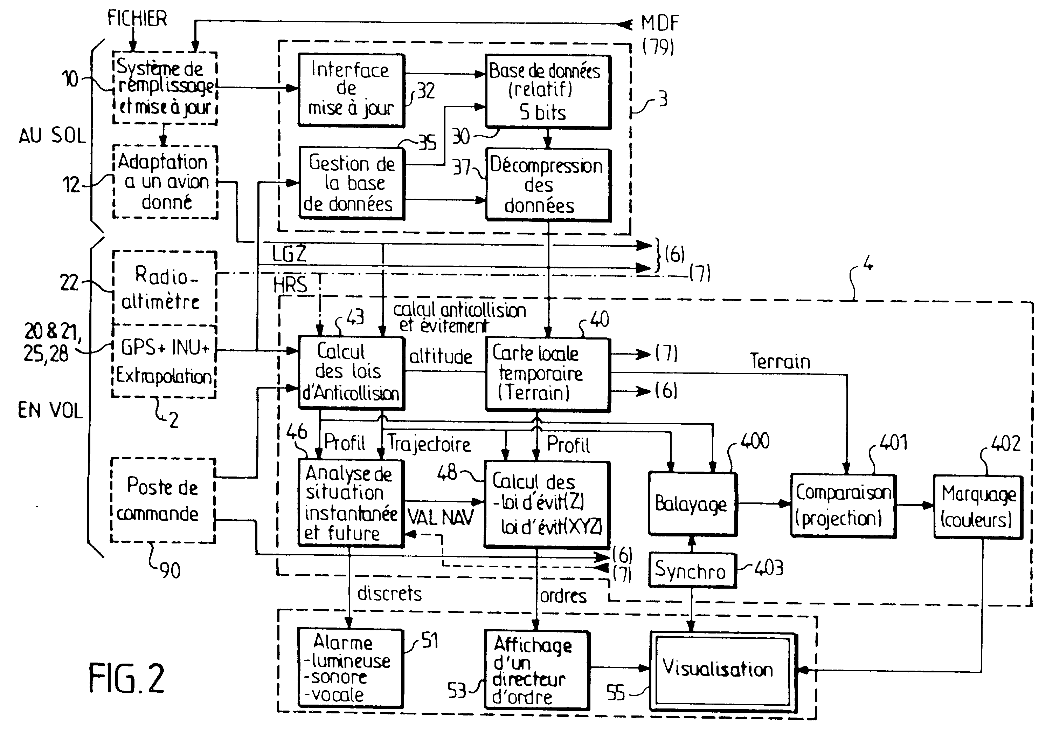

On se réfère tout d'abord aux figures 1 et 2 pour décrire un premier exemple de réalisation, non limitatif, d'un dispositif d'aide à la navigation aérienne selon l'invention.

Le dispositif décrit dans EP-A-0 565 399 est essentiellement destiné à être installé à bord d'un aéronef, et notamment un avion. Celui-ci comporte des équipements 2 capables de fournir sous forme de signaux électriques des indications de paramètres de vol (position et dynamique, notamment), tels qu'une centrale inertielle ou baro-inertielle 20 ou INU, et/ou un instrument de radionavigation, ici un récepteur GPS 21 (mais il pourrait s'agir d'une IRS), avec son antenne, un radio-altimètre 22, avec son antenne, ou d'autres senseurs embarqués de navigation.

La centrale inertielle 20 fournit les composantes des vecteurs vitesse (V) et accélération (GAMMA) de l'aéronef. On peut en déduire tout ou partie des angles caractéristiques associés (incidence, dérapage, pente, tangage, cap, gîte, notamment), ou recueillir directement les valeurs de ces angles utilisées en interne par la centrale inertielle. Ces valeurs angulaires peuvent être affichées et/ou utilisées au niveau du poste de commande. Pour l'altitude, la centrale inertielle coopère avec un altimètre barométrique (non représenté), de manière connue.

On définira les notations ci-après :

- Zb est l'altitude barométrique donnée par la mesure de la pression atmosphérique, et varie selon l'altitude et les conditions météorologiques,
- Zi est l'altitude inertielle calculée par la double intégration de l'accélération verticale mesurée par les accéléromètres de la centrale à inertie (variations à long terme),
- Zbi est l'altitude baro-inertielle, c'est-à-dire Zb filtré par Zi (boucle du 3ème ordre, par exemple),
- Zc sera l'altitude calculée (HRS + Zta), où HRS est la hauteur radio-sonde (ou altitude relative) donnée par le ou les radio-altimètres de l'aéronef (précision de quelques mètres), et Zta sera l'altitude du terrain sous l'aéronef donnée par le fichier terrain (défini plus loin), et
- Zgps est l'altitude fournie par le GPS, par exemple.

Le récepteur GPS 21 fournit des mesures brutes de latitude L1, longitude G1, et altitude Z1 (=Zgps), rafraîchies à une cadence pl de quelques secondes à quelques minutes. Par intégration sur les vecteurs vitesse et accélération, la centrale inertielle 20 fournit d'autres mesures de latitude L0, longitude G0, et altitude Z0 (=Zbi), précises mais dérivant dans le temps. Un bloc 25 compare les deux types de mesure, et valide les grandeurs L1,G1,Z1, si elles sont cohérentes avec L0, G0, Z0. De telles techniques de validation sont connues. Les mesures L2,G2,Z2 validées sont disponibles à la cadence pl. Mais elles sont affinées à partir de la centrale inertielle à une cadence p2 d'environ une seconde.

Un bloc 28 extrapole les informations entre le dernier instant de mesure par l'instrument 21 et l'instant actuel (ou courant) (cette extrapolation est utile notamment en cas de problème de cadence de fourniture des informations, qui peut être trop faible). Le radio-altimètre 22 délivre la hauteur au dessus du sol, notée HRS.

Un bloc 3 contient un fichier terrain, établi d'une façon que l'on décrira ci-après. En fonction des grandeurs L et G, on accède à une partie de ce fichier, dite carte locale, laquelle est une représentation tridimensionnelle du relief de la région survolée par l'aéronef, et stockée dans une mémoire locale 40.

A partir de cette carte locale, et des grandeurs L, G, Z ainsi que HRS, le bloc 4 effectue des calculs d'anti-collision, de préférence accompagnés de calculs d'évitement de terrain.

En présence d'un risque de collision, une alarme (51) est émise. Un directeur d'ordres 53 peut suggérer une manoeuvre d'évitement. Ceci est à destination du poste de commande (ou de pilotage). La carte locale peut être également utilisée pour la génération d'une image synthétique 60, avec son dispositif de visualisation 55.

Tout cela est décrit dans EP-A-0 565 399 et EP-A-0 802 469, qui indiquent également comment rapprocher et vérifier mutuellement les différentes informations disponibles, notamment en vertical.

L'une des bases essentielles de EP-A-0 565 399 est le fait que la Demanderesse a perçu la possibilité de stocker à bord d'un aéronef un fichier de terrain susceptible de représenter la quasi-totalité du bloc terrestre, dans la limite de contour et de résolution qui convient pour les besoins d'un aéronef.

L'analyse de la situation instantanée et prédite de l'aéronef peut alors se résumer à un ensemble de tests de courbes, propre à générer en principe deux types d'alarmes au moins:

- une pré-alarme indiquant une configuration dangereuse à moyen terme, et
- une alarme indiquant une configuration nécessitant une action immédiate du pilote, car la sécurité du vol est mise en cause.

A cet effet, on prévoit deux surfaces (des courbes dans l'espace) de protection de l'aéronef vis-à-vis du terrain, définies suivant le même principe mais avec des paramètres différents, et comprenant :

- une surface à court terme CCT, principalement destinée à éviter un accident. Dès qu'un point du terrain entre dans la surface ou l'enveloppe supérieure de la surface CCT, le pilote doit intervenir (alarme) en effectuant une manoeuvre d'évitement;
- une surface à moyen terme CMT, principalement destinée à prévenir le pilote que la trajectoire de son aéronef va rencontrer un obstacle si elle se poursuit telle quelle, et qu'il doit envisager une manoeuvre d'évitement (préalarme).

Ces surfaces, qui constituent un élément important du système de protection, peuvent être élaborées à partir de nombreux paramètres statiques et dynamiques de l'aéronef, en particulier :

- la fonction de transfert de pilotage de l'aéronef, c'est-à-dire sa capacité à manoeuvrer,
- les retards $TR_0$ dus au temps de réaction du pilote de l'aéronef,
- la vitesse horizontale $V_h$ de l'aéronef,
- la vitesse ascensionnelle $V_z$ de l'aéronef,
- le facteur de charge admissible n.g,
- la hauteur de sécurité prévue, et
- le roulis de l'aéronef.

Pour la suite de la description, quelques définitions sont nécessaires:

- on appelle "axe instantané" de la trajectoire de l'aéronef, de manière prédéfinie, soit la tangente à la trajectoire instantanée (direction du vecteur vitesse instantané), soit l'axe de la trajectoire passée et prédite (si l'aéronef est en virage, "l'axe" est alors courbe), soit encore un axe (en principe intermédiaire) défini, par exemple, par une combinaison linéaire pondérée entre les deux précédents;
- on appelle "plan vertical" une surface (non nécessairement plane) qui contient la verticale passant par l'aéronef et un axe instantané de la trajectoire de l'aéronef ; s'agissant de l'axe de la trajectoire passée et prédite, le "plan vertical" est une surface courbe si l'aéronef est en virage ; on qualifie de "verticales" les manoeuvres dont la composante principale est dans un plan vertical ;
- on appelle "plan horizontal" le plan horizontal passant par un point de référence de l'aéronef (centre de gravité par exemple) et on qualifie comme "horizontales" ou "latérales" les manoeuvres dont la composante principale est dans un plan horizontal ; là aussi, le "plan" horizontal pourrait être une surface courbe dans l'espace, définie d'après la trajectoire de l'aéronef ;
- on distingue, parmi les manoeuvres horizontales, celles qui vont à gauche et celles qui vont à droite de la trajectoire prédite de l'aéronef ;
- enfin les mots "vertical", ainsi que "horizontal" ou "latéral" seront également utilisés pour qualifier notamment les obstacles et les risques qui peuvent être rencontrés lors des manoeuvres.

La courbe limite d'évitement (ou d'évasive) dans le plan vertical peut être définie par trois tronçons:

- de $T_0$ à $T_1$, la poursuite de la trajectoire telle quelle (sans manoeuvre) pendant un temps égal au retard $RT_0 = T_1 - T_0$ (correspondant à un temps de réaction),
- de $T_1$ à $T_2$, une période de transition due à une éventuelle diminution du roulis et au changement du rayon de courbure de la trajectoire passant de l'infini au rayon $R_T$ ascensionnel,
- de $T_2$ à $T_3$, la trajectoire d'évitement proprement dite, dont le rayon de courbure $R_T$ est directement fonction du carré de la vitesse linéaire de l'aéronef, divisé par le facteur de charge réellement appliqué, soit

$$R_T = (V_h)^2/n.g$$

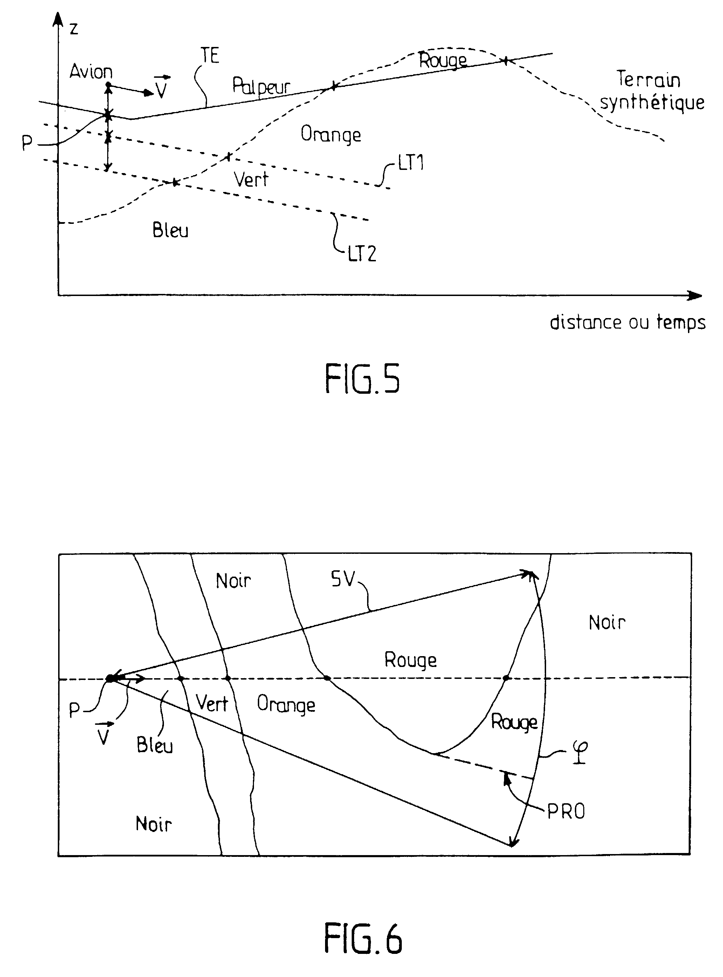

Ce qui précède a, pour l'essentiel, été indiqué sur la figure 6 de EP-A-0 565 399. Aujourd'hui, il est estimé souhaitable d'ajouter à la courbe limite un quatrième tronçon :

- au delà de T3, une ligne droite de pente liée aux caractéristiques (performances) de l'aéronef.

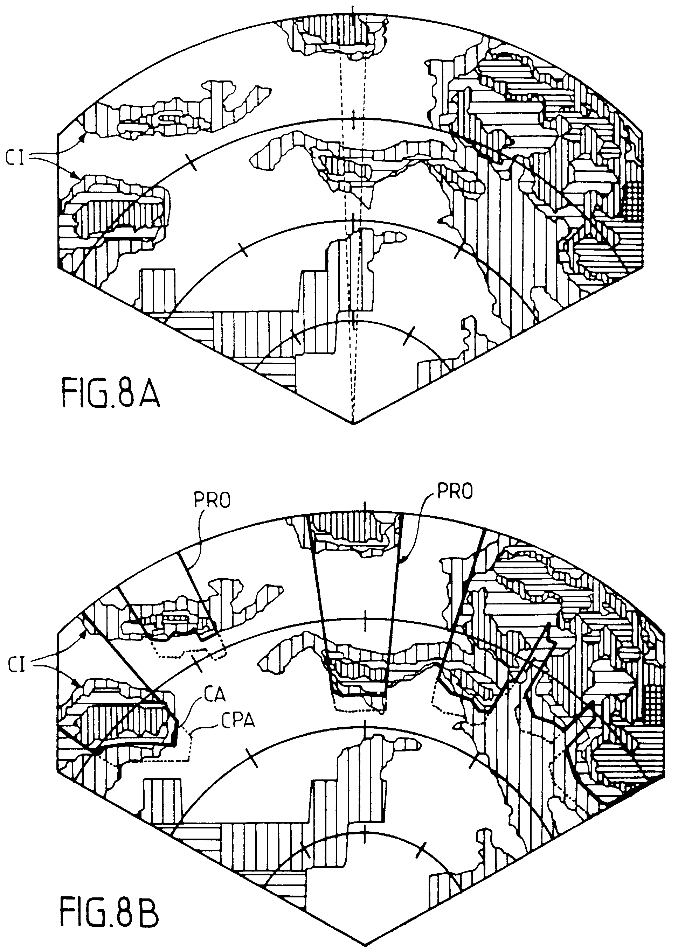

En pratique, la "courbe limite d'évitement" est une surface dans l'espace, que l'on appelle "palpeur". Pour un traitement numérique, cette surface est échantillonnée en une famille de segments curvilignes : voir notamment le texte et les figures 8A et 8B de EP-A-0 802 469, pour de plus amples informations. Ainsi :

- est définie d'abord une trajectoire correspondant à une manoeuvre standard d'évitement dans le plan vertical SVRM ("Standard Vertical Recovery Manoeuver");
- en prenant l'axe instantané de la trajectoire de l'aéronef et/ou selon l'orientation de la trajectoire prédite (ou leurs combinaisons linéaires), on peut faire glisser sur cet axe la SVRM, jusqu'au point où elle rencontre l'enveloppe du terrain;
- on peut alors définir un temps ou point de référence vertical VRP ("Vertical Reference point"), qui est le début de la SVRM;

- en amont de ce point VRP sur la trajectoire prédite, on définit deux temps VT5 et VT20, avec par exemple VT5 = VRP - 5 secondes, et VT20 = VRP - 20 secondes;
- une préalarme et une alarme "verticales" sont alors définies, respectivement dès que l'aéronef passe le point VT20, et dès qu'il passe le point VT5 (l'alarme "écrase" naturellement la préalarme).

Les moyens techniques qui viennent d'être définis donnent satisfaction dans la majeure partie des situations rencontrées en pratique.

En bref, ils permettent de fournir au(x) pilote(s) de l'aéronef un signal d'alarme "à cabrer" (en anglais "Pull up"), si la trajectoire prédite laisse supposer un risque certain vis-à-vis du terrain survolé avoisinant, afin que le pilote puisse initier d'urgence une manoeuvre d'évitement de ce terrain avec une marge minimum de sécurité. La notion de marge minimum de sécurité s'entend à la fois en temps de réaction de l'homme et en distance vis-à-vis du terrain évité. L'expression "terrain survolé avoisinant" tient compte non seulement du terrain directement rencontré dans l'axe de la trajectoire de l'aéronef, mais aussi de ses parties voisines.

A ce signal d'alarme est associé un signal préalable (pré-alarme), qui intervient quelques secondes auparavant, afin de prévenir l'équipage de la proximité de ce risque potentiel. Cependant, il existe des cas où il est normal que l'aéronef dépasse le point ultime pour effectuer la manoeuvre d'évitement standard. Or, au-delà de ce point, aucune manoeuvre d'évitement "verticale" n'est plus possible.

L'invention part de la génération de "lignes de trajectoire".

Une ligne de trajectoire est établie à partir d'une trajectoire estimée ou prédite de l'avion, calculée à partir de sa position et de sa dynamique actuelles. La trajectoire estimée peut être calculée sans changement des commandes de pilotage, ou bien au contraire avec un tel changement, c'est-à-dire avec une manoeuvre, qui modifiera la dynamique de l'aéronef.

Il est important de comprendre qu'une ligne de trajectoire n'est pas nécessairement une véritable trajectoire future de l'avion. On pourra la décaler dans l'espace, en position et en direction, comme on le verra plus loin.

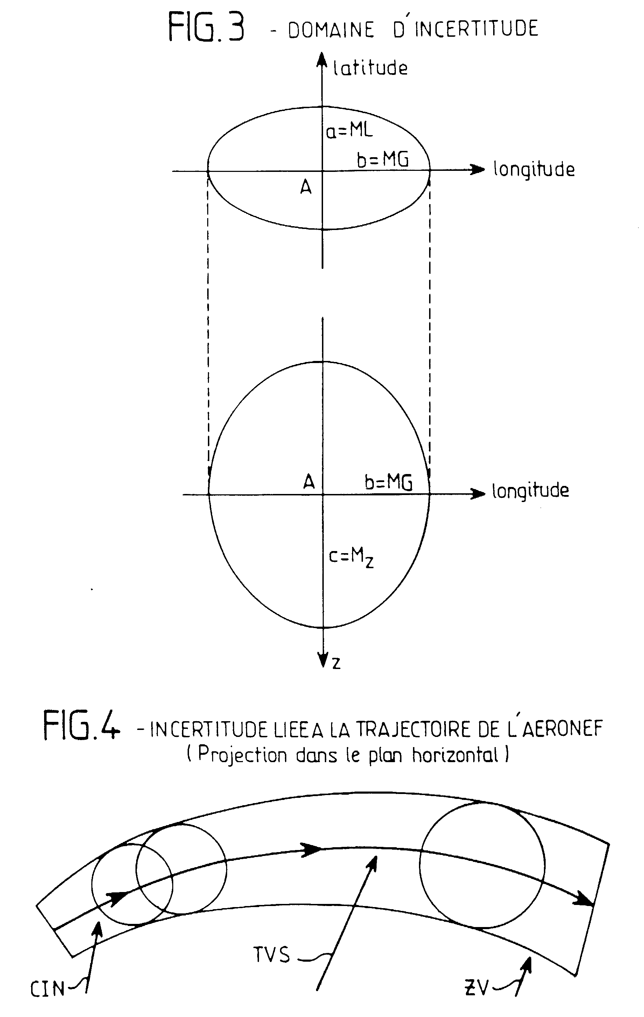

Enfin, au moins pour les lignes de trajectoire qui sont effectivement des trajectoires futures de l'avion, on pourra prévoir autour de la ligne un domaine (Figures 3 et 4), prenant en compte différentes marges d'incertitude, notamment celles décrites dans EP-A-0 565 399 et/ou EP-A-0 802 469.

Les calculs requis pour la mise en oeuvre de l'invention, notamment pour calculer les lignes de trajectoire, peuvent être conduits avec un micro-ordinateur de type POWER PC 603, à l'aide de programmes écrits, par exemple, en langage C de type C.ANSI, le cas échéant avec l'assistance d'un processeur d'appoint de type DSP.

On décrira d'abord le principe général de l'invention, en référence aux figures 5 et 6 qui illustrent un premier mode de réalisation.

Sur la figure 5, on voit une trajectoire limite d'évitement standard TE (en anglais "Standard Horizontal or Vertical Recovery Manoeuver"), qui, partant de la position présente de l'avion P, se continue par une brève poursuite de la trajectoire actuelle, puis par une remontée, formant un angle vertical choisi par rapport à la trajectoire actuelle, ce que l'on va appeler un "palpeur".

Le "terrain synthétique" issu de la base de données est illustré ici par un trait tireté serré.

Sous l'avion, on a également représenté deux lignes de trajectoire LT1 et LT2, qui sont ici des parallèles à la trajectoire présente de l'avion (et également à sa trajectoire passée, puisqu'ici l'avion est supposé voler en ligne droite).

Les figures 5 et 6 permettront de faire apparaître des notions de couleur qui ne pourront être données dans les illustrations qui suivront, et seront remplacées par des hachures.

Un secteur de visualisation SV apparaît sur la figure 6. Il part ici à partir d'une pointe représentative de la position présente P de l'avion, la figure 6 étant une projection sur un plan horizontal.

Le terrain est défini en courbes de niveau, mais établies perpendiculairement aux plans qui vérifient les deux conditions suivantes :

- passer à chaque fois par la ligne de trajectoire concernée LT1 ou LT2,

- être perpendiculaires au plan de la figure 5 (cette perpendicularité ne vaut que pour un vol en ligne droite).

Le terrain peut être alors visualisé comme illustré sur la figure 6, avec en bleu les parties les plus basses, qui se trouvent sous la ligne LT2, en vert les parties de terrain comprises entre les lignes de trajectoire LT1 et LT2, en orange la partie du terrain située au-dessus de la ligne de trajectoire LT1. De préférence, en dehors du secteur de visualisation SV la seule couleur utilisée est le noir.

Ces intersections avec les plans définissent des portions de contour qui forment un "fond de carte" ou un "fond d'image".

En outre, pour l'opération d'alerte proprement dite, on considère l'intersection de la trajectoire d'évitement TE avec le terrain qui, ici, se produit. Les parties de terrain "significatives" se situant au-dessus de cette courbe TE sont illustrées en rouge sur la figure 6.

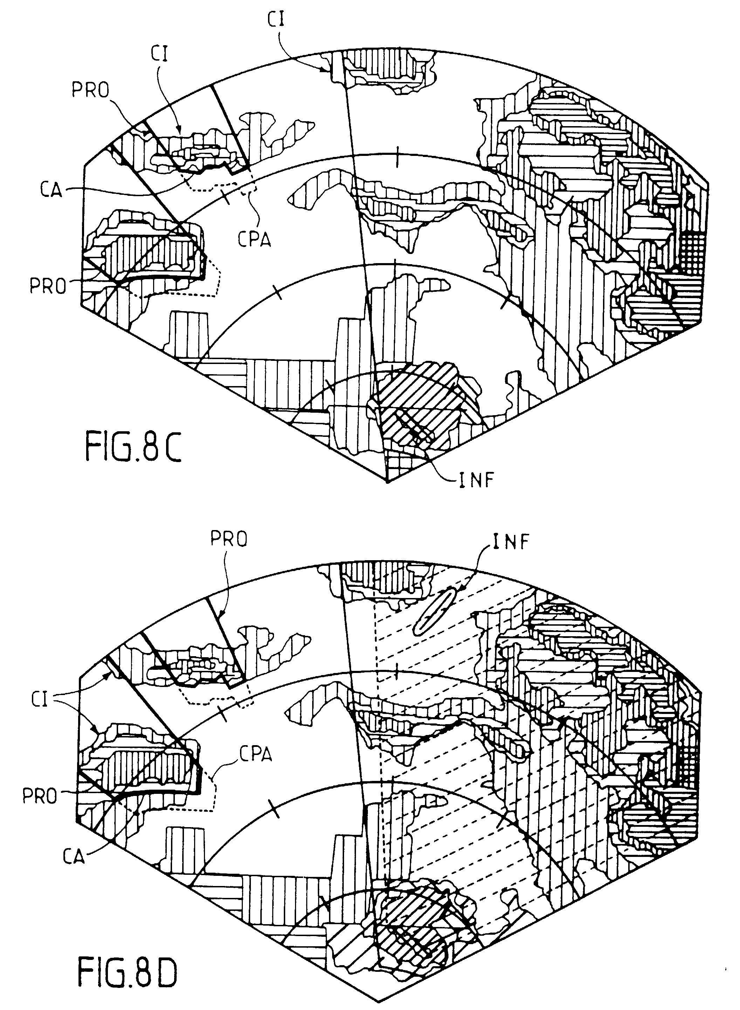

On comprendra que la correspondance entre la figure 5 et la figure 6 ne vaut que pour le trait tireté horizontal donné sur la figure 6, le reste s'en déduit, d'une manière que comprendra l'homme du métier. L'ensemble du contour visualisé sur la figure 6 représente le résultat d'un cycle de balayage angulaire sur un secteur d'exploration, ici le secteur s'étend sur environ 30°, mais il peut être compris entre environ 1° et environ 360°, si nécessaire. Par ailleurs, le trait tireté PRO de la figure 6 représente la prolongation "linéaire" vers l'aval de la portion de contour amont. On reviendra plus loin sur cette prolongation, dans la partie se référant notamment aux figures 8.

L'invention peut être mise en oeuvre de différentes manières. Ceci est vrai notamment en ce qui concerne les trajectoires surveillées.

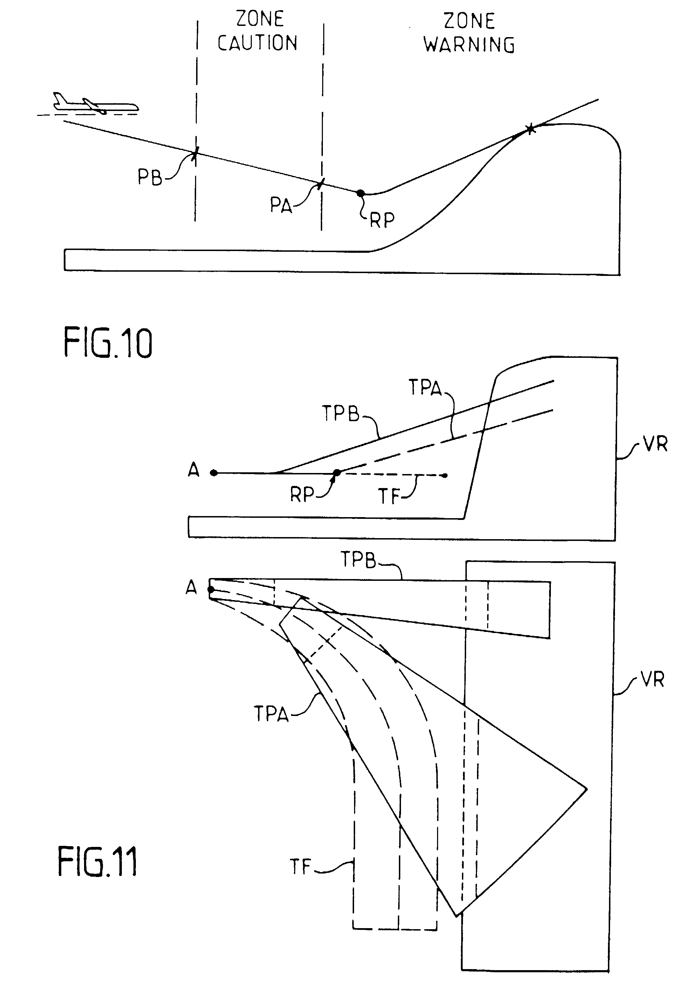

Les algorithmes de génération d'alarme sont mis en oeuvre en tenant compte conjointement des risques de collision de l'aéronef avec le relief VR selon les trajectoires prédites suivantes (figure 11):

- trajectoire future de l'avion (notée TF),
- trajectoire d'évitement pour pré-alarme ("palpeur A" noté TPA),
- trajectoire d'évitement pour l'alarme ("warning") selon une manoeuvre "nominale d'évitement" (appelée également "trajectoire standard d'évitement"), susceptible d'être suivie si une alarme due à la surveillance de la trajectoire future précitée est détectée ("palpeur B" noté TPB). Actuellement, la manoeuvre "nominale d'évitement" est essentiellement dans le plan vertical (après avoir redressé l'aéronef s'il était en virage).

Le plus souvent, l'avion vole en ligne droite. Il en résulte que tout relief détecté par le palpeur A est nécessairement détecté aussi par le palpeur B, car les deux trajectoires prédites correspondantes sont situées dans le même plan vertical.

Par contre, il en est différemment quand l'avion est en virage. Les axes respectifs de ces deux trajectoires peuvent se trouver respectivement dans deux plans verticaux décalés, faisant entre eux un angle horizontal qui dépend du rayon de virage instantané.

Dans ce cas, et selon un aspect tout à fait significatif de l'invention, la Demanderesse prévoit d'agir comme suit: les alarmes fortes (voyant visuel et message parlé de "caution", mais non la visualisation) générées par la détection de conflit entre la trajectoire d'évitement standard et le relief peuvent être inhibées, dès lors qu'aucun conflit n'est détecté sur la trajectoire future de l'avion et/ou sur la trajectoire d'évitement TPA susceptible d'être initiée au cours de cette trajectoire future.

Ceci permet d'assurer les bonnes performances du système, en évitant une alarme intempestive alors que le pilote a déjà initié une manoeuvre appropriée pour éviter la collision avec le terrain, manoeuvre souvent délicate, au cours de laquelle il est inutile, sinon nuisible, de détourner son attention.

De façon générale, les palpeurs précités sont des portions ou secteurs de surfaces délimitant un volume de protection devant l'avion, face aux risques de collision avec le terrain. La forme verticale de ces palpeurs est décrite dans les brevets précédents de la Demanderesse, notamment EP-A-0 565 399 et EP-A-0 802 469.

La projection sur un plan horizontal de ce volume est constituée (figure 9) par la partie d'un secteur située en avant de l'avion. A son extrémité proche ou "entrée" (au niveau de la position de l'avion), ce secteur est d'une largeur configurable (par exemple 200 m) ou plus généralement variable, en fonction notamment de l'erreur latérale estimée sur la position de l'avion. Latéralement, ce secteur est ouvert angulairement en fonction de l'un au moins des critères suivants:

- de part et d'autre de la trajectoire instantanée de l'avion pour le palpeur B ("alarme"),
- de part et d'autre de la trajectoire prédite au temps associé (par exemple 20 secondes) pour le palpeur A ("pré-alarme"),
- à chaque fois d'un angle déterminé (valeur configurable, par exemple 1.5°), qui peut être augmenté, notamment en cas de virage, à une valeur supérieure du côté du virage (au moins) de manière à inclure la trajectoire future de façon certaine,
- de façon limitée à une ouverture maximum, par exemple à 90° (2*45°), ou 120°, ou 180°, voire jusqu'à 360° pour certains aéronefs comme les hélicoptères.

En variante (compatible avec ce qui précède), la projection sur un plan horizontal de ce volume peut être systématiquement constituée (figures 3 et 4) par un domaine centré autour de la trajectoire future prédite. Ce peut être par exemple une bande allant en s'évasant avec le temps, ayant à l'entrée - au niveau de la position actuelle de l'avion - une largeur configurable (par exemple 200 m) ou variable correspondant à l'erreur latérale estimée sur la position de l'avion, comme déjà indiqué.

La distance entrée/sortie ou profondeur du secteur peut être définie en fonction de la vitesse de l'avion, ou d'autres critères, liés ou non à cette vitesse. Elle peut aussi être fixe.

Cette dernière projection est bien adaptée à la trajectoire future de l'avion, tandis que la première est préférablement applicable à la trajectoire standard d'évitement.

Il est important de souligner que la génération d'alarme se fonde, en partie au moins, sur une prédiction de trajectoire future, au lieu d'être systématiquement fondée sur la direction de l'axe instantané de l'avion.

On considère maintenant la visualisation des risques de collision avec le terrain. Cette visualisation est importante, car il faut délivrer au pilote un message clair, quoique complexe.

De façon générale, le système proposé présente sur un écran, en fonction de la position actuelle de l'avion, des informations sur les risques de conflit avec le terrain, afin de fournir au(x) pilote(s) une vue de la situation environnante ("situation awareness"). Ces informations comprennent, simultanément ou non, et en une ou plusieurs images, (Figures 8A à 8D) :

- un fond d'image représentant sous forme de contour d'intersection CI les reliefs significatifs susceptibles de présenter un danger pour l'avion compte-tenu de sa position et de sa trajectoire actuelle (et, implicitement, de critères choisis relatifs à ses possibilités de manoeuvre);
- des informations visuelles CPA (contour de pré-alarme) et CA (contour d'alarme) sur les zones géographiques où potentiellement peuvent être générées des alarmes relatives au terrain ("pré-alarmes" et "alarmes");
- des informations INF relatives, par exemple, à la localisation de villes ou de zones aéroportuaires;
- des informations représentant les zones de conflit avec le terrain, dangereuses pour l'avion ("pré-alarmes" et "alarmes", selon l'alarme générée), et dont le franchissement devient limite voire impossible.

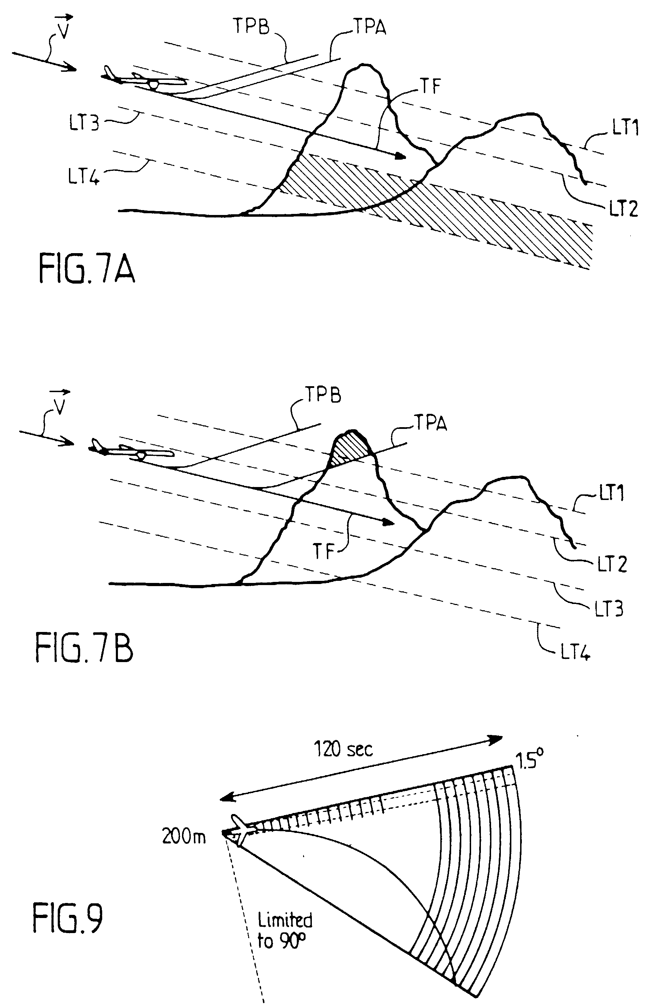

Les figures 7A et 7B concernent le cas d'un aéronef en descente, V étant son vecteur vitesse. TF est sa trajectoire future estimée, sans manoeuvre. TPA est la trajectoire future du palpeur "A" (pré-alarme). TPB est la trajectoire future du palpeur "B" (alarme), qui est en principe la trajectoire standard d'évitement vertical. Les obliques en trait pointillé sont des lignes de trajectoire LT1 à LT4 appartenant à des nappes s'étendant sur le secteur de balayage en avant de l'aéronef. Ici les nappes, et par conséquent les lignes de trajectoire, sont des parallèles équidistantes par rapport à la trajectoire future TF. On notera que ce ne sont pas des trajectoires réelles de l'avion. La figure 7B se distingue par un risque sur le palpeur TPA du fait que celui-ci intersecte le relief.

Transversalement, on procède comme suit :

a) les moyens de traitement 4, et plus particulièrement son module de balayage 400 (voir figure 2), sont agencés, tout d'abord, pour calculer des vecteurs auxiliaires (ou vecteurs vitesse auxiliaires) par décalage du vecteur vitesse (instantané) de l'aéronef selon une loi de balayage angulaire choisie,

b) ensuite, ils définissent un secteur (angulaire) à l'aide d'une nappe de lignes de trajectoire partant du vecteur vitesse et des vecteurs auxiliaires.

Les opérations a) et b) ci-dessus sont conduites pour chacun des niveaux (ou nappes) de lignes de trajectoire illustrés sur les figures 7A et 7B, qui demeurent limitées au plan vertical. Cela sert donc aussi bien pour déterminer les portions de contour d'intersection CI formant le fond d'image que pour les portions de contour d'alerte CPA et CA obtenus à partir des trajectoires d'évitement.

En outre, lorsque l'avion est en virage, et/ou en manoeuvre verticale, on tient compte préférentiellement de l'accélération. Ainsi, chaque secteur est une surface courbe, engendrée par une famille de lignes courbes délimitant la nappe. Par exemple, si l'avion descend verticalement, le balayage angulaire (loi de balayage angulaire choisie), des vecteurs vitesse auxiliaires engendre sensiblement un secteur d'une surface conique. De préférence cette loi consiste à faire varier l'angle $\varphi$ du vecteur vitesse instantané dans le plan horizontal en conservant ces deux autres coordonnées sphériques constantes.

On appelle "secteur de vol", le secteur contenant la trajectoire TF des figures 7A et 7B. La représentation du fond de carte correspond en tout point à la situation réelle future de l'avion : quelle que soit la position future hypothétique de l'avion sur l'une des trajectoires futures comprises dans ce secteur de vol, la représentation du relief est rapportée directement à cette position future, c'est à dire en termes de hauteur par rapport à l'avion. Cette opération est effectuée par le module de comparaison 401 pour ce qui concerne la détermination du contour et par le module 402 pour ce qui concerne le marquage des différentes zones séparées par des portions de contours distinctes.

Ainsi, le pilote dispose d'un contour d'intersection CI (ou carte), qui représente le relief dans la direction du vecteur vitesse de l'aéronef, et sur un secteur angulaire choisi. Le nombre de niveaux superposés du relief affiché dépendra du nombre de nappes utilisées pour intersecter le relief.

Pour le reste, le fond d'image et les autres informations sont générés à partir de la base de données terrain, par exemple de la manière décrite dans EP-A-0 565 399, EP-A-0 802 469 ou d'autres propositions similaires apparues depuis.

Les risques de conflit avec le terrain (mais non la représentation du terrain en lui-même) peuvent être présentés sur un écran particulier séparé. On considère actuellement comme préférentiel d'utiliser un écran de navigation ou d'affichage de la carte météorologique 55, existant normalement dans l'aéronef.

Les risques de conflit sont transmis à l'écran par l'intermédiaire d'un bus reliant le système GCAS à cet écran. Ce bus sera de préférence un bus de type vidéo ou numérique, normalement utilisé sur avion, tel que Arinc 646 (Ethernet), Arinc 629 ou Arinc 453.

Les risques de conflit peuvent être présentés de différentes manières:

- de façon exclusive des autres visualisations qui apparaissent classiquement sur l'écran retenu (de préférence l'écran d'affichage de la carte météorologique). Dans ce cas, un organe de sélection de la visualisation peut être nécessaire;
- alternativement, en combinaison avec ces autres visualisations, par exemple représentation horizontale de la route suivie simultanément avec les risques de collision avec le terrain et éventuellement avec en plus les informations INF de trafic (par exemple autres avions environnants) ou de localisation de zones aéroportuaires.

En d'autre termes, l'affichage peut être alterné, par exemple la carte météo étant affichée en alternance avec la carte de risque de collision (contour). On peut prévoir par ailleurs que la carte de collision soit affichée systématiquement, et de façon prioritaire dés qu'une alarme est émise. On peut également envisager d'afficher les carte météo et de risque de collision en même temps, ainsi qu'éventuellement d'autres informations INF utiles.

Les données correspondantes à visualiser sont converties selon le codage propre au bus retenu.

On examine maintenant la représentation visuelle du fond d'image. Celui-ci est de préférence visualisé selon le cap avion.

Le fond d'image représente la hauteur des reliefs relativement à l'altitude estimée que va avoir l'avion en chacun des points considérés, compte-tenu de sa position et de sa trajectoire actuelle (figures 7A et 7B). Cette estimation peut-être effectuée par exemple selon des radiales à partir de sa position actuelle selon la pente actuelle de sa trajectoire ou selon des courbes représentatives du virage à effectuer pour atteindre chacun de ces points (voir figures 9 et 11).

Une telle présentation permet de montrer les risques potentiels de collision avec le relief du terrain, et ceci, compte-tenu de la trajectoire actuelle TF de l'avion. Ainsi seuls les risques réels sont visualisés et apparaissent pour une pente donnée (que ce soit une descente ou une montée) par l'extrémité de la visualisation opposée à l'aéronef, permettant une réelle anticipation de ces risques. Cette visualisation s'effectue de préférence par "projection" du contour sur un plan horizontal.

Cette hauteur relative est représentée par des symboles de couleur différente et/ou de densité variable et/ou avec des symboles différents (par exemple sous forme de + et/ou ^ et/ou ~ et/ou de triangle) selon les tranches de cette hauteur relative. Une teinte jaune ou ambre est préférentiellement prise pour les hauteurs relatives qui sont telles que le terrain est au-dessus de l'avion et au-dessus d'une marge de dessous de l'avion. Le terrain situé en dessous d'un certain seuil (supérieur à la marge mentionnée ci-dessus, par exemple 1500 ft) peut ne pas être visualisé.

Le fond d'image est généré préférablement de part et d'autre du cap avion avec une ouverture définie par une distance latérale ou par une ouverture angulaire. Vers le devant de l'avion, il s'étend sur une distance (échelle) qui utilise au maximum les possibilités d'affichage de l'écran. Une zone balayée plus restreinte est néanmoins envisageable temporairement ou de façon permanente.

Les zones de génération d'alarme représentent les zones géographiques à partir desquelles une pré-alarme ("caution") et/ou une alarme ("alarme") peuvent être générées dès que l'avion entre dans cette zone, compte-tenu de sa position et de sa trajectoire actuelles. On verra maintenant comment les palpeurs A et B peuvent être définis en même temps.

La limite de ces zones est générée en balayant de part et d'autre devant l'avion avec une ouverture configurable (par exemple ± 45°, mais on peut prévoir une étendue plus petite ou plus grande) une ligne droite ou courbe représentative par exemple d'une radiale ou d'un virage à partir de la position actuelle de l'avion et selon la pente actuelle de sa trajectoire (tirée du vecteur vitesse), et en faisant progresser le long de cette ligne une trajectoire standard d'évitement (ou d'évasive; comme par exemple celle décrite dans un brevet précédent sur le GCAS) jusqu'à un point où cette trajectoire standard d'évitement rencontre le terrain ou relief, éventuellement avec une marge, fixe ou non. Pour accélérer les calculs, cette marge peut être appliquée a priori à l'altitude du terrain, ou à la trajectoire, ou encore à l'aéronef. Le point RP illustré sur la figure 10 matérialise le début de la manoeuvre d'évitement.

Deux points PA et PB situés sur cette ligne, avant le point RP calculé ci-dessus, déterminent les limites amont des zones pré-alarme (point PA) et alarme (PB), respectivement (Figure 10). Ces points sont définis de préférence selon 2 temps d'anticipation (par exemple 5 secondes et 20 secondes); on pourrait aussi les définir en distance, ou d'une autre manière équivalente, au moins dans certains cas. Ils matérialisent le temps dont dispose théoriquement l'aéronef pour parcourir la distance qui sépare le point concerné (PA ou PB) du point RP matérialisant le début de la manoeuvre. L'écart temporel entre les points PA et PB est actuellement choisi égal à environ 15 secondes, mais on pourrait le prévoir plus petit ou plus grand.

En appliquant le balayage angulaire aux lignes de trajectoire d'une nappe, on obtient ainsi une portion amont de contour d'alerte, c'est à dire proche de l'avion. Il reste à le terminer par une portion aval jusqu'aux limites de la visualisation (du secteur visualisé).

Ceci pourrait se faire comme pour la représentation des reliefs du fond de carte. Il est actuellement jugé préférable de procéder autrement: on considère deux lignes adjacentes ; lorsqu'un point RP est déterminé sur l'une de ces deux lignes, mais non sur l'autre, le reste du contour PRO peut être prolongé vers l'aval jusqu'aux limites de visualisation par l'une ou l'autre de ces deux lignes adjacentes (voire par les deux), d'une manière prédéfinie.

Il convient de donner à ces contours et/ou aux zones qu'ils délimitent une représentation distinctive. Ce caractère distinctif peut être obtenu, à l'aide d'un module de marquage 402, par marquages tels que des traits (comme sur les figures 8A à 8D) ou des symboles de couleurs différentes ou de nuances différentes (par exemple des nuances de gris) et/ou de densité variable et/ou avec des symboles différents pour la zone pré-alarme et la zone alarme. Une teinte jaune ou ambre est considérée comme préférentielle pour différencier la zone pré-alarme et une teinte rouge est considérée comme préférentielle pour différencier la zone alarme.

Les zones de conflit avec le terrain sont présentées (ou affichées) quand l'avion entre dans une zone de génération d'alarme. Dans ce cas l'ensemble des points du relief dépassant la trajectoire standard d'évitement associée à la zone pénétrée (pré-alarme ou alarme, délimitée par un contour d'alerte CPA ou CA) avec une éventuelle marge fixe ou non sont représentés préférentiellement en couleur pleine comme illustré sur la figure 7B. Une teinte jaune ou ambre est préférablement prise pour les reliefs pénétrant la trajectoire standard d'évitement associée à une pré-alarme et une teinte rouge pour les reliefs pénétrant la trajectoire standard d'évitement associée à une alarme.

Le secteur situé derrière ces points de relief peut éventuellement être en outre coloré de la même façon, ou selon une couleur mariée.

Le système considère des points d'une trajectoire future estimée de l'avion, ou d'une réplique décalée d'un telle trajectoire future. Il compare l'altitude (dite "altitude avion") à la verticale de ce point, et l'élévation supposée du terrain en ce point, tirée d'une base de donnée. Afin d'assurer un bon fonctionnement quand l'avion est près du sol, il est important que cette différence soit la plus proche possible de la réalité.

De préférence, l'altitude avion utilisée (au moins pour les algorithmes de génération d'alarme, mais de préférence aussi pour la représentation du terrain) est consolidée par une hauteur réelle obtenue par un moyen tel que le radio-altimètre. On opère comme suit :

Au dessus d'un seuil haut H1 (réglable) de la mesure du radio-altimètre (par exemple 1500 ft), l'altitude utilisée par les algorithmes de génération d'alarme, et comparée à l'élévation terrain issue d'une base de données, est tirée essentiellement des moyens de navigation de bord de l'avion, par exemple d'un récepteur de radionavigation GPS et/ ou d'un système inertiel ou baro-inertiel IRS.

En dessous d'un seuil bas H2 (réglable) de la mesure du radio-altimètre (par exemple 500 ft ou 1000 ft), l'altitude utilisée par les algorithmes de génération d'alarme, et comparée à l'élévation terrain issue d'une base de données, est tirée de la valeur fournie par le radio-altimètre additionnée à l'élévation extraite de la base de données terrain (représentant le relief).

Entre ces 2 valeurs seuil H1 et H2, l'altitude utilisée par les algorithmes de génération d'alarme, et comparée à l'élévation terrain issue d'une base de données, est obtenue par une combinaison entre l'altitude obtenue à partir des moyens de navigation à bord de l'avion et le radio-altimètre, par exemple une interpolation linéaire entre ces 2 valeurs telle que donnée par la formule suivante :

$$\text{Altitude\_prédiction} = x * \text{Altitude\_senseurs} + y (\text{radioaltitude} + \text{elevation\_terrain})$$

avec

$$x = (\text{radioaltitude} - H2) / (H1 - H2)$$

et

$$y = 1 - x$$

De par cette consolidation d'altitude, les erreurs verticales sur la position avion et/ou sur les élévations fournies par la base de données terrain, ainsi que les erreurs horizontales sur la position avion sont alors compensées, et permettent aux algorithmes de prendre réellement en compte les menaces dues au terrain malgré ces erreurs.

Par ailleurs, il peut arriver que l'avion se trouve en face de reliefs qu'une manoeuvre "nominale d'évitement" ne peut permettre de franchir : l'évitement de tels obstacles nécessite non seulement une manoeuvre d'évitement vertical, mais aussi une manoeuvre d'évitement sur un côté de l'avion (ou virage).

La Demanderesse préconise qu'une alarme spéciale soit engendrée dans une telle situation. L'alarme spéciale consiste en une indication spécifique qui est fournie au pilote sous forme orale et/ou visuelle (par exemple "Avoid Terrain" en message parlé et/ou en texte sur un écran et/ou par allumage d'un voyant lumineux, par exemple de couleur rouge).

De façon générale, l'alarme spéciale est émise quand du terrain (en portion significative) commence à dépasser le palpeur vers le haut, à l'extrémité distante du palpeur et/ou sur les côtés de celui-ci, ou bien après une période d'inhibition des algorithmes de génération des alarmes.

Dans un exemple particulier, les cas suivants entraînent la génération de cette indication dite alarme spéciale :

- terrain plus haut que le palpeur à son extrémité, ce terrain ne pouvant pas, alors, être évité par une simple manoeuvre verticale,
- terrain plus haut que le palpeur entrant sur le côté lors d'un virage et que le temps de remise à plat de l'avion ne permet pas d'éviter ce terrain,
- terrain dépassant le palpeur d'une hauteur plus élevée qu'un seuil vertical configurable (par exemple 500 ft),
- terrain dépassant le palpeur sans toutefois excéder le seuil vertical précédent sur une distance latérale horizontale supérieure à une valeur configurable (par exemple 2000 m).

D'autres éléments concernant une alarme de type "Avoid terrain" seront trouvés dans EP-A-0 802 469.

Le système ainsi défini possède tout ou partie des propriétés suivantes:

- il comprend des moyens pour générer de façon orale et/ou visuelle une indication en cas de situation non franchissable par une manoeuvre de cabrage ("pull-up"),
- il comprend des moyens pour détecter les risques non seulement sur la trajectoire future de l'avion mais aussi sur la trajectoire nominale d'évitement,
- il comprend des moyens pour générer des alarmes avec le terrain qui tiennent compte non seulement de la trajectoire future de l'avion mais aussi de la trajectoire nominale d'évitement,
- il comprend un ou des palpeurs s'ouvrant sur les côtés en fonction du taux de virage et/ou du roulis de manière à surveiller la trajectoire future de l'avion,
- il comprend un ou des palpeurs orientés selon la route de l'aéronef prédite et/ou la trajectoire prédite et/ou le cap prédit,
- il comprend un ou des palpeurs constitués par une surface ou domaine entourant la trajectoire prédite,
- il comprend des moyens de visualisation pour présenter un fond terrain constitué par des hauteurs relatives du terrain avec des élévations prédites de l'avion,
- il comprend des moyens de visualisation pour présenter les zones prédites de génération d'alarmes relatives au terrain,
- il comprend des moyens de visualisation pour présenter les zones où un risque de conflit avec le terrain est détecté sur la trajectoire future et/ou d'évitement standard prédite,
- il comprend des moyens de consolidation de l'altitude utilisée par les logiques de détection des risques de collision, en particulier par combinaison avec une valeur de radioaltitude.

Bien entendu, le module de traitement 4 selon l'invention comprend avantageusement un module de synchronisation 403 qui pilote les modules de balayage 400 et de visualisation 55 de façon à assurer le renouvellement périodique de l'affichage à partir de mesures réactualisées.

Par ailleurs, tous les seuils et valeurs donnés ci-avant, le sont à titre d'exemple. Leurs choix respectifs reposent sur des préférences actuelles liées aux capacités des aéronefs et des pilotes. En conséquence, ces seuils et valeurs pourront être choisis différents de ceux indiqués, pourvu qu'ils restent dans les intervalles précisés dans les revendications ci-après et dans la partie introductive du présent document.

Ainsi :

- les parties sensiblement parallèles des nappes sont de préférence espacées verticalement d'une distance comprise entre environ 50 pieds et environ 3000 pieds, en particulier entre 100 pieds et 700 pieds. De même, les parties sensiblement parallèles des nappes sont espacées l'une de l'autre d'un intervalle temporel compris entre environ 5 secondes et environ 60 secondes, en particulier 15 secondes;
- le balayage angulaire s'étend sur entre environ 1° et environ 360°, en particulier entre 60° et 120°;
- les moyens de traitement sont agencés pour effectuer chaque intersection avec le relief sur une portée correspondant à un temps de parcours de l'aéronef au moins égal à environ 30 secondes, en particulier 120 secondes;
- les moyens de visualisation sont agencés pour permettre la visualisation du contour, dans au moins la direction du vecteur vitesse de l'aéronef, sur une étendue comprise entre environ 5 Miles Nautiques et environ 400 Miles Nautiques;
- le critère choisi pour l'émission d'une alarme visuelle et/ou sonore, portant sur la distance verticale séparant une représentation de l'intersection entre le relief et la trajectoire d'évasive et le sommet du relief placé sensiblement au droit de l'intersection entre le relief et la trajectoire d'évasive concernée, est une comparaison entre la distance verticale et un seuil vertical compris entre environ zéro (0) pieds et environ 800 pieds (de préférence égal à environ 500 pieds), l'alarme étant déclenchée lorsque cette distance verticale est supérieure au seuil vertical;
- en variante, ce critère choisi pour l'émission d'une alarme visuelle et/ou sonore, portant sur la distance verticale séparant une représentation de l'intersection entre le relief et la trajectoire d'évasive et le sommet du relief placé sensiblement au droit de l'intersection entre le relief et la trajectoire d'évasive concernée, est une première comparaison entre la distance verticale et un seuil vertical compris entre environ 100 pieds et environ 800 pieds (de préférence égal à environ 500 pieds), couplée à une seconde comparaison entre un seuil horizontal choisi et la distance horizontale sur laquelle la nappe, formée des lignes de trajectoire d'évasive concernée, intersecte le relief, l'alarme étant déclenchée lorsque la distance horizontale est supérieure au seuil horizontal choisi et que dans le même temps la distance verticale demeure inférieure au seuil vertical; et
- le critère choisi pour l'émission d'une alarme visuelle et/ou sonore, en cas d'intersection entre, d'une part, le relief et l'une au moins des première et seconde trajectoire d'évasive, et d'autre part, le relief et au moins la trajectoire future estimée, est une première comparaison entre un seuil vertical compris entre environ zéro (0) pieds et environ 800 pieds la distance verticale séparant le sommet du relief sensiblement au droit d'un point éloigné d'une distance horizontale choisie de l'intersection entre le relief et la trajectoire d'évasive, couplée à une seconde comparaison entre une durée-seuil et la durée nécessaire à la remise à plat de l'aéronef, l'alarme étant déclenchée lorsque la distance verticale est supérieure au seuil vertical choisi et que dans le même temps la durée de remise à plat est supérieure à la durée-seuil; la durée-seuil étant comprise de préférence entre environ 10 secondes et environ 150 secondes, en particulier entre 60 secondes et 120 secondes.

## Revendications

1. Dispositif d'aide à la navigation aérienne, comprenant:

   - une entrée pour recevoir des indications d'état représentatives de la position et du vecteur vitesse de l'aéronef,
   - une mémoire de travail pour stocker une représentation tridimensionnelle du relief de la région survolée par l'aéronef,
   - des moyens de traitement aptes à définir, en fonction desdites indications d'état, un secteur d'exploration rapporté à l'avion, et à calculer dans ce secteur un contour en fonction de l'intersection de ce secteur avec le relief, et
   - des moyens de visualisation de ce contour,

   caractérisé en ce que les moyens de traitement sont agencés pour calculer des vecteurs vitesse auxiliaires par décalage du vecteur vitesse de l'aéronef selon une loi de balayage angulaire choisie, et pour définir ledit secteur par une nappe de lignes de trajectoire partant du vecteur vitesse et des vecteurs vitesse auxiliaires.

2. Dispositif selon la revendication 1, caractérisé en ce que les lignes de trajectoire ont toutes la même géométrie.

3. Dispositif selon la revendication 2, caractérisé en ce que les lignes de trajectoire sont des répliques d'une trajectoire estimée de l'aéronef, à commandes de pilotage inchangées, de sorte que le contour d'intersection tienne compte des conditions courantes de vol de l'aéronef.

4. Dispositif selon la revendication 3, caractérisé en ce que les moyens de traitement sont agencés pour définir plusieurs nappes de lignes de trajectoire ayant des décalages verticaux différents, de préférence espacés au départ de façon sensiblement régulière.

5. Dispositif selon la revendication 4, caractérisé en ce que lesdites nappes sont au moins partiellement sensiblement parallèles entre elles.

6. Dispositif selon la revendication 5, caractérisé en ce que les parties sensiblement parallèles desdites nappes sont espacées verticalement d'une distance comprise entre environ 50 pieds et environ 3000 pieds, en particulier entre 100 pieds et 700 pieds.

7. Dispositif selon l'une des revendications 1 à 6, caractérisé en ce que les lignes de trajectoires sont des premières lignes de trajectoire d'évasive estimées, à commandes de pilotage modifiées selon une première loi d'évasive choisie, partant du vecteur vitesse et des vecteurs vitesse auxiliaires.

8. Dispositif selon la revendication 7, caractérisé en ce que la première loi d'évasive comprend une prolongation d'une représentation de la trajectoire courante établie en fonction d'un critère choisi, suivie d'une manoeuvre ayant une composante verticale.

9. Dispositif selon la revendication 8, caractérisé en ce que les moyens de traitement sont agencés pour calculer le contour, dit premier contour d'alerte, en fonction du point de départ de chaque manoeuvre en chaque première ligne de trajectoire d'évasive estimée de ladite nappe, lorsque l'une au moins desdites premières trajectoires d'évasive estimées intersecte le relief.

10. Dispositif selon l'une des revendications 1 à 9, caractérisé en ce que les lignes de trajectoires sont des secondes lignes de trajectoire d'évasive estimées, à commandes de pilotage modifiées selon une seconde loi d'évasive choisie, partant du vecteur vitesse et des vecteurs vitesse auxiliaires.

11. Dispositif selon la revendication 10, caractérisé en ce que la seconde loi d'évasive comprend une prolongation d'une représentation de la trajectoire courante établie en fonction d'un critère choisi, suivie d'une manoeuvre ayant une composante verticale.

12. Dispositif selon la revendication 11, caractérisé en ce que les moyens de traitement sont agencés pour calculer ledit contour, dit second contour d'alerte, en fonction du point de départ de chaque manoeuvre en chaque seconde ligne de trajectoire d'évasive estimée de ladite nappe, lorsque l'une au moins desdites secondes trajectoires d'évasive estimées intersecte le relief.

13. Dispositif selon l'une des revendications 1 à 12, caractérisé en ce que chaque intersection est limitée à une partie amont, chaque contour étant alors constitué de ladite partie amont et d'une prolongation vers l'aval déterminée selon une règle choisie.

14. Dispositif selon l'une des revendications 5 à 9 en combinaison avec l'une des revendications 10 à 13, caractérisé en ce que les nappes formées des premières et secondes lignes de trajectoire d'évasive sont au moins partiellement sensiblement parallèles entre elles.

15. Dispositif selon la revendication 14, caractérisé en ce que les parties sensiblement parallèles desdites nappes sont espacées l'une de l'autre d'un intervalle temporel compris entre environ 5 secondes et environ 60 secondes, en particulier 15 secondes.

16. Dispositif selon l'une des revendications 1 à 15, caractérisé en ce que le balayage angulaire s'étend sur un intervalle compris entre environ 1° et environ 360°, en particulier entre 60° et 120°.

17. Dispositif selon l'une des revendications 1 à 16, caractérisé en ce que les moyens de traitement comprennent des moyens de différenciation propres à attribuer des marquages différents aux zones situées de part et d'autre de chaque contour, lesdits marquages étant choisis en fonction d'un critère prédéterminé portant sur un risque de collision entre l'aéronef et le relief.

18. Dispositif selon la revendication 17, caractérisé en ce que le critère prédéterminé est une loi portant sur la distance séparant chaque point du contour du point représentatif du relief situé à la vertical dudit point de contour, lesdits marquages différents correspondant à des intervalles de distance différents, prédéterminés et représentatifs de risques de collision associés.

19. Dispositif selon la revendications 18, caractérisé en ce que chaque marquage consiste en une colorisation.

20. Dispositif selon la revendication 19, caractérisé en ce que les différentes couleurs sont choisies parmi une famille de normes comprenant au moins les normes JAR 25-1322 et FAR 25-1322, la couleur la plus froide correspondant au risque de collision le plus petit.

21. Dispositif selon la revendication 18, caractérisé en ce que les différents marquages sont des nuances de gris ou des trames différentes.

22. Dispositif selon l'une des revendications 1 à 21, caractérisé en ce que les moyens de traitement sont agencés pour effectuer chaque intersection avec le relief sur une portée correspondant à un temps de parcours de l'aéronef au moins égal à environ 30 secondes, en particulier 120 secondes.

23. Dispositif selon l'une des revendications 1 à 22, caractérisé en ce que les moyens de visualisation sont agencés pour permettre la visualisation du contour, dans au moins la direction du vecteur vitesse de l'aéronef, sur une étendue comprise entre environ 5 Miles Nautiques et environ 400 Miles Nautiques.

24. Dispositif selon l'une des revendications 1 à 23, caractérisé en ce que les moyens de traitement sont agencés pour commander l'affichage en alternance du contour et d'une carte météorologique.

25. Dispositif selon l'une des revendications 1 à 23, caractérisé en ce que les moyens de traitement sont agencés pour commander l'affichage simultané du contour et d'une carte météorologique.

26. Dispositif selon l'une des revendications 1 à 24, caractérisé en ce que les moyens de traitement sont agencés pour commander l'affichage d'informations complémentaires, notamment de type localisation d'aéroports.

27. Dispositif selon l'une des revendications 7 à 26, caractérisé en ce que les moyens de traitement sont agencés pour déclencher une pré-alarme sonore ou visuelle choisie en cas d'intersection entre une nappe formée de premières lignes de trajectoire d'évasive.

28. Dispositif selon l'une des revendications 10 à 27, caractérisé en ce que les moyens de traitement sont agencés pour déclencher une alarme sonore ou visuelle choisie en cas d'intersection entre une nappe formée de secondes lignes de trajectoire d'évasive.

29. Dispositif selon la revendication 27 en combinaison avec l'une des revendications 24 et 25, caractérisé en ce que les moyens de traitement sont agencés pour forcer l'affichage du contour en cas d'émission d'une pré-alarme.

30. Dispositif selon l'une des revendications 24 et 25, caractérisé en ce que les moyens de traitement sont agencés pour, en cas d'intersection entre le relief et au moins la nappe formée de secondes lignes de trajectoire d'évasive, déterminer si la trajectoire estimée intersecte également ledit relief, et autoriser l'émission d'une alarme que lorsque cette intersection est déterminée.

31. Dispositif selon l'une des revendications 28 à 31 en combinaison avec l'une des revendications 24 et 25, caractérisé en ce que les moyens de traitement sont agencés pour forcer l'affichage du contour en cas d'émission d'une alarme.

32. Dispositif selon l'une des revendications 1 à 31, caractérisé en ce que les moyens de traitement sont agencés pour émettre une autre alarme visuelle et/ou sonore, en cas d'intersection, vérifiant un critère choisi, entre, d'une part, le relief et l'une au moins des première et seconde trajectoire d'évasive, et d'autre part, le relief et au moins la trajectoire future estimée.

33. Dispositif selon la revendication 32, caractérisé en ce que ledit critère choisi porte au moins sur la distance verticale séparant une représentation de l'intersection entre le relief et la trajectoire d'évasive et le sommet du relief placé sensiblement au droit de l'intersection entre ledit relief et la trajectoire d'évasive concernée.

34. Dispositif selon la revendication 33, caractérisé en ce que ledit critère choisi est une comparaison entre ladite distance verticale et un seuil vertical compris entre environ zéro (0) pieds et environ 800 pieds, ladite alarme étant déclenchée lorsque cette distance verticale est supérieure audit seuil vertical.

35. Dispositif selon la revendication 33, caractérisé en ce que ledit critère choisi est une première comparaison entre ladite distance verticale et un seuil vertical compris entre environ 100 pieds et environ 800 pieds, couplée à une seconde comparaison entre un seuil horizontal choisi et la distance horizontale sur laquelle la nappe, formée des lignes de trajectoire d'évasive concernée, intersecte le relief, ladite alarme étant déclenchée lorsque ladite distance horizontale est supérieure audit seuil horizontal choisi et que dans le même temps la distance verticale demeure inférieure audit seuil vertical.

**36.** Dispositif selon l'une des revendications 34 et 35, caractérisé en ce que ledit seuil vertical est égal à environ 500 pieds.

**37.** Dispositif selon la revendication 32, caractérisé en ce que ledit critère choisi est une première comparaison entre un seuil vertical compris entre environ zéro (0) pieds et environ 800 pieds la distance verticale séparant le sommet du relief sensiblement au droit d'un point éloigné d'une distance horizontale choisie de l'intersection entre ledit relief et la trajectoire d'évasive, couplée à une seconde comparaison entre une durée-seuil et la durée nécessaire à la remise à plat de l'aéronef, ladite alarme étant déclenchée lorsque ladite distance verticale est supérieure audit seuil vertical choisi et que dans le même temps la durée de remise à plat est supérieure à ladite durée-seuil.

**38.** Dispositif selon la revendication 37, caractérisé en ce que ladite durée-seuil est comprise entre environ 10 secondes et environ 150 secondes, en particulier entre 60 secondes et 120 secondes.

**39.** Dispositif selon l'une des revendications 1 à 38, caractérisé en ce que les moyens de traitement sont agencés pour définir, en fonction desdites indications d'état et du relief, un domaine englobant chaque ligne de trajectoire constituant une nappe, et déterminer l'intersection entre chaque nappe et le relief à partir des intersections des domaines de chacune de ses lignes de trajectoire avec ledit relief.

**40.** Dispositif selon la revendication 39, caractérisé en ce que le point d'intersection d'une ligne de trajectoire contribuant à la formation du contour est obtenu en prenant le point d'intersection, parmi tous les points d'intersection entre le domaine de cette ligne de trajectoire et le relief, qui possède l'altitude la plus élevée.

**41.** Dispositif selon l'une des revendications 1 à 40, caractérisé en ce qu'il comprend une mémoire de masse () pour stocker une base de données () représentant au moins une partie du globe terrestre, et des moyens de gestion () propres à extraire de la base de données les représentations tridimensionnelles du relief en fonction des paramètres de position de l'aéronef.

**42.** Dispositif selon l'une des revendications 1 à 41, caractérisé en ce que ladite entrée est agencée pour recevoir des indications d'état, et notamment une altitude réelle et une altitude relative référencée par rapport au terrain survolé, et en ce que les moyens de traitement sont agencés pour déterminer les trajectoires estimées et d'évitement à partir d'une altitude choisie parmi lesdites altitudes réelle et relative et une altitude composite en fonction d'une comparaison à deux seuils d'altitude prédéterminés, ladite altitude choisie étant :

- soit l'altitude réelle lorsque ladite altitude réelle est inférieure aux deux seuils,
- soit l'altitude relative lorsque ladite altitude réelle est supérieure aux deux seuils,
- soit l'altitude composite lorsque ladite altitude réelle est comprise entre les deux seuils.

**43.** Dispositif selon la revendication 42, caractérisé en ce que l'altitude composite est formée à partir d'une combinaison pondérée des altitudes relative et réelle.

**44.** Procédé d'aide à la navigation aérienne d'un aéronef, comportant les étapes suivantes :

a) recevoir dans l'aéronef des indications d'état représentant sa position et son vecteur vitesse,
b) stocker dans une mémoire de travail une représentation tridimensionnelle du relief de la région survolée par l'aéronef,
c) définir, en fonction desdites indications d'état, un secteur d'exploration rapporté à l'aéronef, et calculer dans ce secteur un contour en fonction de l'intersection de ce secteur avec le relief, et
d) visualiser ledit contour,

caractérisé en ce que l'étape c) comporte les sous-étapes suivantes :

c1) calculer des vecteurs vitesse auxiliaires par décalage du vecteur vitesse de l'aéronef selon une loi de balayage angulaire choisie, et
c2) définir ledit secteur par une nappe de lignes de trajectoire partant du vecteur vitesse et des vecteurs vitesse auxiliaires.

FIG.1

FIG.2

FIG.3 - DOMAINE D'INCERTITUDE

FIG.4 - INCERTITUDE LIEE A LA TRAJECTOIRE DE L'AERONEF
( Projection dans le plan horizontal )

FIG.5

FIG.6

EP 0 928 952 A1

FIG.7A

FIG.7B

FIG.9

22

FIG.8A

FIG.8B

FIG.8C

FIG.8D

FIG.10

FIG.11

**Office européen des brevets**

# RAPPORT DE RECHERCHE EUROPEENNE

Numéro de la demande

EP 99 40 0040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | GB 2 310 184 A (MARCONI GEC LTD) 20 août 1997 | 1-5,44 | G01C5/00 G05D1/06 |
| Y | * abrégé * * page 8, ligne 6 - ligne 21; figures 2-4 * | 17-19,21 | |
| Y | EP 0 381 178 A (HONEYWELL INC) 8 août 1990 * colonne 5, ligne 49 - colonne 6, ligne 27; figures * | 17-19,21 | |
| D,A | EP 0 565 399 A (DASSAULT ELECTRONIQUE) 13 octobre 1993 * le document en entier * | 1,44 | |
| D,A | EP 0 802 469 A (DASSAULT ELECTRONIQUE) 22 octobre 1997 * le document en entier * | 1,44 | |
| A | DE 43 04 561 A (DEUTSCHE AEROSPACE) 18 août 1994 * le document en entier * | 1,44 | DOMAINES TECHNIQUES RECHERCHES (Int.Cl.6) G01C G05D |

Le présent rapport a été établi pour toutes les revendications

| Lieu de la recherche | Date d'achèvement de la recherche | Examinateur |
|---|---|---|
| LA HAYE | 14 avril 1999 | Hoekstra, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 0040

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-04-1999

| Document brevet cité au rapport de recherche | | Date de publication | Membre(s) de la famille de brevet(s) | | Date de publication |
|---|---|---|---|---|---|
| GB 2310184 | A | 20-08-1997 | EP | 0790487 A | 20-08-1997 |
| | | | US | 5864307 A | 26-01-1999 |
| EP 0381178 | A | 08-08-1990 | JP | 3009211 A | 17-01-1991 |
| | | | US | 5086396 A | 04-02-1992 |
| EP 0565399 | A | 13-10-1993 | FR | 2689668 A | 08-10-1993 |
| | | | AT | 147869 T | 15-02-1997 |
| | | | CA | 2093546 A | 08-10-1993 |
| | | | DE | 69307377 D | 27-02-1997 |
| | | | DE | 69307377 T | 03-07-1997 |
| | | | DK | 565399 T | 14-07-1997 |
| | | | ES | 2099391 T | 16-05-1997 |
| | | | GR | 3022297 T | 30-04-1997 |
| | | | JP | 6024393 A | 01-02-1994 |
| | | | US | 5488563 A | 30-01-1996 |
| | | | US | 5638282 A | 10-06-1997 |
| EP 0802469 | A | 22-10-1997 | FR | 2747492 A | 17-10-1997 |
| | | | CA | 2202677 A | 15-10-1997 |
| | | | JP | 10035594 A | 10-02-1998 |
| DE 4304561 | A | 18-08-1994 | AUCUN | | |

EPO FORM P0460